# FASCICULE DE BREVET EUROPEEN

(11) **EP 2 564 734 B1**
(45) Date de publication et mention de la délivrance du brevet: **02.04.2014**
(21) Numéro de dépôt: 12182529.3
(22) Date de dépôt: 31.08.2012
(51) Int. Cl.: A47J 27/14, A47J 36/16, A47J 37/06, A47J 37/12

(54) **Dispositif de cuisson**
Garvorrichtung
Cooking device

(30) Priorité: 05.09.2011 FR 1157851
(43) Date de publication de la demande: 06.03.2013
(73) Titulaire: Cometto Industrie, 01480 Jassans Riottier (FR)
(72) Inventeur: Rolot, Patrick, 01700 Beynost (FR)
(74) Mandataire: Verriest, Philippe

(56) Documents cités:
- EP-A1- 1 741 370
- DE-C- 937 007
- US-A1- 2001 029 846

## Description

La présente invention concerne un dispositif de cuisson, notamment du type sauteuse-braisière.

Un tel dispositif est classiquement utilisé dans une cuisine collective, telle qu'une cantine scolaire ou d'entreprise, pour réchauffer, cuire, griller, sauter, saisir ou faire revenir une composition alimentaire.

Un dispositif de cuisson du type sauteuse-braisière, connu de l'état de la technique, est décrit dans le document EP1741370.

Ce dispositif comporte un bâti supportant une cuve de cuisson d'une composition alimentaire. Cette cuve, de forme parallélépipédique, présente une paroi de fond et quatre parois latérales.

Le dispositif comporte un organe de raclage de la paroi de fond et de brassage de la composition alimentaire, monté mobile à l'intérieur de la cuve, et des moyens de déplacement dudit organe.

Ces moyens de déplacement comprennent un arbre monté en rotation sur deux paliers solidaires du bâti à l'extérieur de la cuve, une tête montée mobile en translation le long de l'arbre, et un bras raccordant l'organe de raclage et de brassage à ladite tête.

De tels moyens de déplacement sont désavantageux en ce qu'ils empêchent la disposition d'un couvercle obturant l'intégralité de la cuve en conditions d'utilisation. Aussi, la composition alimentaire présente un risque de contamination, et le temps de cuisson de cette composition est allongé.

En outre, lorsqu'un utilisateur plonge la main dans la cuve ou qu'un ustensile est oublié dans cette cuve par accident, l'organe de raclage et de brassage tend à poursuivre sa course sans s'arrêter. Par ailleurs, les moyens de déplacement sont disposés à portée de l'utilisateur, et celui-ci peut accrocher la tête ou le bras en conditions d'utilisation.

Il existe ainsi des risques de blessure de l'utilisateur et de casse des moyens de déplacement.

Enfin, la tête est équipée de roulements obliques en prise directe sur l'arbre tournant. Afin de limiter le risque de grippage des roulements ou des paliers solidaires du bâti, ceux-ci sont lubrifiés au moyen d'une graisse. Celle-ci peut engendrer un risque de contamination de la composition alimentaire.

L'invention vise à remédier à ces inconvénients.

L'invention concerne ainsi un dispositif de cuisson, notamment du type sauteuse-braisière, comportant :
- une cuve de cuisson d'une composition alimentaire comprenant une paroi de fond et au moins une paroi latérale ;
- un organe de raclage de la paroi de fond et/ou de brassage de la composition alimentaire monté mobile à l'intérieur de la cuve ; et
- des moyens de déplacement dudit organe ;
où les moyens de déplacement comportent:
- un premier chariot solidaire dudit organe, monté mobile à l'intérieur de la cuve le long d'une première direction, et un second chariot adapté pour coopérer par accouplement magnétique avec le premier chariot, monté mobile à l'extérieur de la cuve le long d'une seconde direction parallèle à la première direction, le premier et le second chariots étant disposés de part et d'autre de la paroi latérale ; et
- des moyens d'entrainement du second chariot.

En réponse à un entrainement du second chariot le long de la seconde direction, le second chariot entraine le premier chariot le long de la première direction, par accouplement magnétique au travers de la paroi latérale.

Ainsi, l'organe de raclage et/ou de brassage solidaire du premier chariot est déplacé à l'intérieur de la cuve.

Le dispositif de cuisson est avantageux en ce qu'il permet de disposer un couvercle couvrant l'intégralité de la cuve de cuisson. De la sorte, le risque de contamination de la composition alimentaire et le temps de cuisson sont réduits.

En outre, lorsqu'un utilisateur plonge sa main de la cuve ou qu'un ustensile est oublié dans cette cuve par accident, le premier chariot stoppe sa course à l'intérieur de la cuve en butant contre la main ou l'ustensile tandis que le second chariot poursuit sa course à l'extérieur de la cuve.

Ainsi, les risques de blessure de l'utilisateur et de casse des moyens de déplacement sont réduits.

Le dispositif de cuisson selon l'invention peut comporter en outre une ou plusieurs des caractéristiques suivantes.

Suivant une caractéristique, le premier et/ou le second chariots comprennent un aimant permanent.

Dans une forme d'exécution préférée, la cuve est sensiblement parallélépipédique, le premier et le second chariots sont disposés de part et d'autre d'une paroi latérale longitudinale de la cuve, et les première et seconde directions s'étendent longitudinalement.

Avantageusement, le dispositif de cuisson est équipé d'un rail de guidage monté à l'extérieur de la cuve agencé pour guider le déplacement du second chariot le long de la seconde direction.

Suivant une caractéristique, les moyens d'entrainement comprennent une chaine sans fin sur laquelle est monté le second chariot, et un moteur agencé pour entrainer ladite chaine.

De préférence, le moteur est de type pas à pas ; et le dispositif comporte :
- un capteur de position configuré pour générer un signal prédéterminé lors d'un passage du second chariot dans une position prédéterminée, et
- une unité de commande configurée pour commander le moteur en fonction du signal généré par le capteur de position.

Par exemple, le capteur de position détecte une position de début de course du second chariot. La longueur de course est spécifiée à l'unité de commande. L'unité de commande est configurée pour inverser le sens de rotation du moteur lorsque le capteur de position génère le signal prédéterminé et lorsque le second chariot est en fin de course.

Ainsi, un seul capteur de position, contre deux pour le dispositif de cuisson décrit dans le document précité, est nécessaire.

Dans sa forme d'exécution préférée, la cuve est supportée par un bâti, et le capteur de position comprend une partie mobile montée sur la chaine et une partie fixe montée sur le bâti, le capteur de position étant configuré pour générer le signal prédéterminé lorsque la partie mobile est en vis-à-vis de la partie fixe.

Avantageusement, la chaine forme une boucle présentant un brin supérieur s'étendant au-dessus de la paroi de fond, sur lequel est monté le second charriot, et un brin inférieur s'étendant au-dessous de la paroi de fond, sur lequel est montée la partie mobile du capteur de position.

En conditions d'utilisation, la paroi de fond est chauffée par des moyens de chauffage. En déportant la partie mobile du capteur de position, et par la même la partie fixe, sous paroi de fond de la cuve, le risque de détérioration du capteur de position par échauffement est réduit.

De préférence, le dispositif de cuisson est équipé de moyens de contrôle adaptés pour ajuster la vitesse de déplacement du second chariot et/ou la fréquence de déplacement du second chariot et/ou la longueur de course du second chariot.

De tels moyens, avantageusement montés en façade sur le bâti, permettent à l'utilisateur d'adapter la vitesse de déplacement de l'organe et/ou la fréquence de déplacement dudit organe et/ou la course dudit organe suivant le mets préparé.

L'invention sera mieux comprise à l'aide de la description qui suit en référence au dessin schématique annexé représentant, à titre d'exemple non limitatif, un dispositif de cuisson selon l'invention.
Figure 1 en est une vue en perspective ;
Figure 2 est une vue en perspective de moyens de déplacement d'un organe de raclage et de brassage équipant le dispositif de figure 1 ;
Figure 3 est une vue en perspective d'une cuve de cuisson et de l'organe de raclage et de brassage équipant le dispositif de figure 1 ;

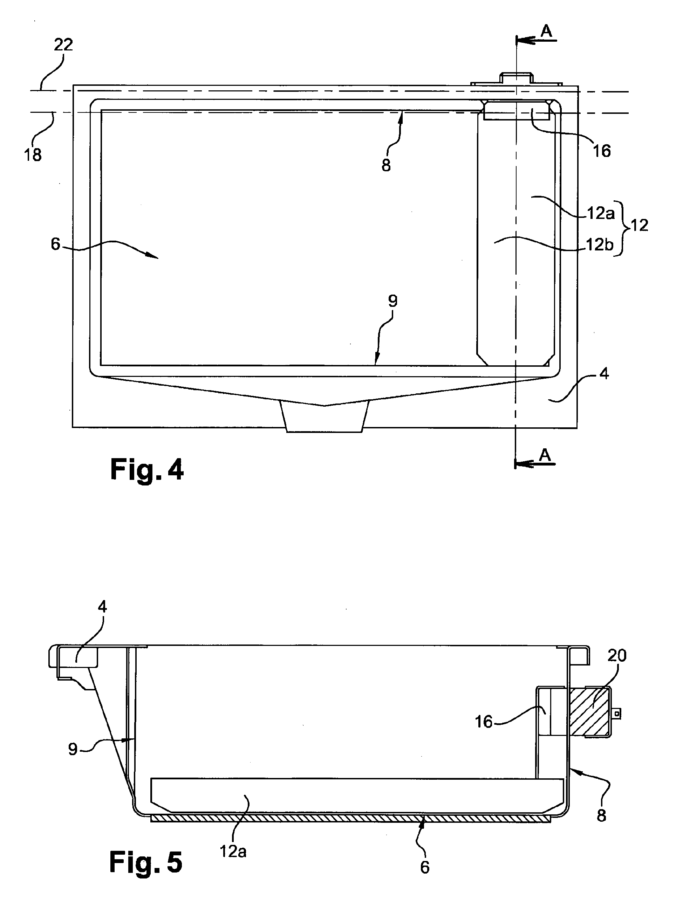

Figure 4 est une vue partielle de dessus de la cuve de cuisson et de l'organe de raclage et de brassage ; et
Figure 5 est une vue partielle en coupe selon la ligne A-A de figure 4 de la cuve de cuisson et de l'organe de raclage et de brassage.

Dans la suite de cette description, les termes « au-dessus » et « au-dessous » sont utilisés en référence à une position d'utilisation du dispositif de cuisson.

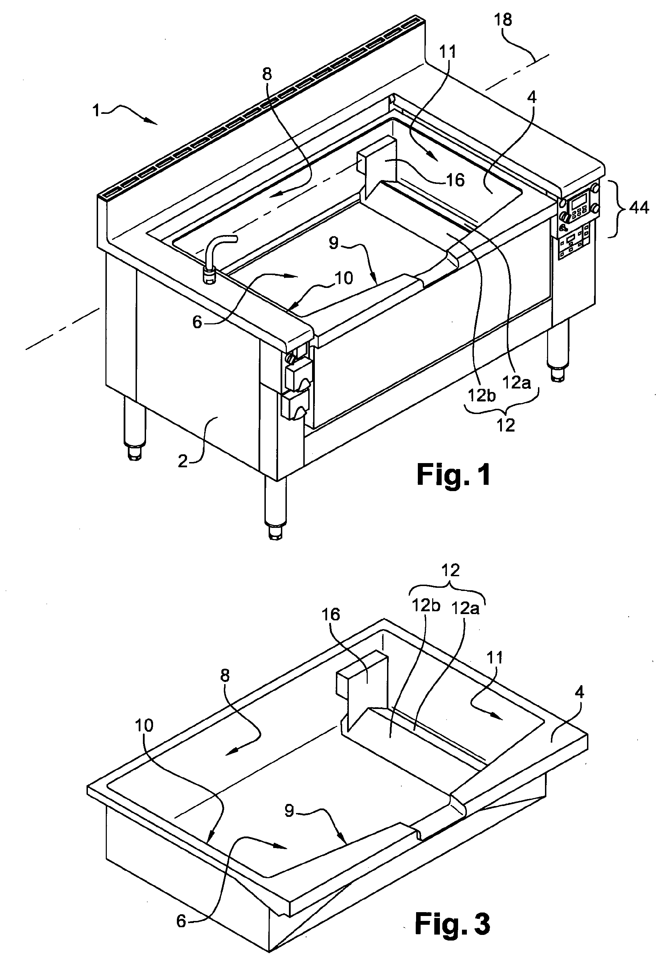

La figure 1 représente un dispositif 1 de cuisson du type sauteuse-braisière. Ce dispositif 1 comporte un bâti 2 supportant une cuve 4 de cuisson d'une composition alimentaire.

La cuve 4 est disposée au dessus de moyens de chauffage, classiquement constitués de brûleurs à gaz ou de résistances chauffantes électriques. La cuve 4 présente une forme sensiblement parallélépipédique. Cette cuve 4 comprend :
- une paroi de fond 6;
- deux parois latérales longitudinales 8 et 9 ; et
- deux parois latérales transversales 10 et 11.

Ici, le bâti 2 et la cuve 4 sont en acier inoxydable.

Le bâti 2 et la cuve 4 sont connus en soi, et ne sont pas décrits plus en détails.

Le dispositif 1 comporte un organe 12 de raclage de la paroi de fond 6 et de brassage de la composition alimentaire monté mobile à l'intérieur de la cuve 4.

L'organe 12 s'étend transversalement à l'intérieur de la cuve 4, de préférence sur toute la largeur de celle-ci. Ici, l'organe 12 comprend deux raclettes 12a et 12b sensiblement planes, inclinées par rapport à la paroi de fond 6. Les raclettes 12a et 12b sont raccordées l'une à l'autre en formant un angle.

Afin d'alléger l'organe 12, celui-ci est avantageusement réalisé en polytétrafluoréthylène plus connu sous le nom de Téflon®.

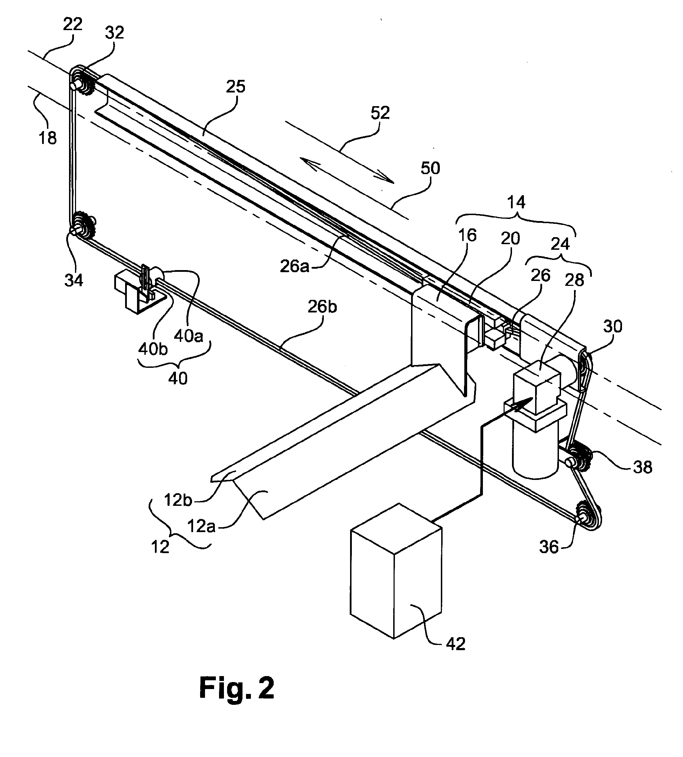

Le dispositif 1 comporte des moyens de déplacement 14 (représentés à la figure 2) de l'organe 12. Ces moyens de déplacement 14 comprennent :
- un chariot 16 solidaire de l'organe 12, monté mobile à l'intérieur de la cuve 4 le long d'une direction 18 ;
- un chariot 20 monté mobile à l'extérieur de la cuve 4 le long d'une direction 22 parallèle à la direction 18 ; et
- des moyens d'entrainement 24 du chariot 20 le long de la direction 22.

Les directions 18 et 22 sont sensiblement rectilignes et s'étendent longitudinalement. P a r « longitudinalement » on entend sensiblement parallèlement à la paroi 8.

Les chariots 16 et 20 sont disposés de part et d'autre de la paroi 8. Le chariot 20 est guidé le long de la direction 22 par un rail de guidage 25 monté à l'extérieur de la cuve 4. Ici, le rail de guidage 25 est monté sur le bâti 2.

Le chariot 20 est adapté pour coopérer par accouplement magnétique avec le chariot 16 au travers de la paroi 8. A cet effet, le chariot 20 et le charriot 16 comprennent chacun un aimant permanent.

Les moyens d'entrainement 14 comprennent une chaîne 26 sans fin et un moteur 28 pas à pas agencé pour entrainer la chaîne 26.

La chaîne 26 forme une boucle s'étendant entre :
- un pignon moteur 30 raccordé au moteur 28 par un arbre ;
- des pignons de renvoi 32, 34 et 36 ; et
- un pignon tendeur 38.

La chaîne 26 comprend un brin supérieur 26a s'étendant entre les pignons 30 et 32 au dessus de la paroi de fond 6, et un brin inférieur 26b s'étendant entre les pignons 34 et 36 au-dessous de la paroi de fond 8. Le chariot 20 est monté sur le brin supérieur 26a de la chaîne 26.

Le dispositif 1 comporte un capteur de position 40 configuré pour générer un signal prédéterminé lorsque le chariot 20 est en position de début de course.

Ce capteur de position 40 comprend une partie mobile 40a montée sur le brin inférieur 26b et une partie fixe 40b montée sur le bâti 2. Le capteur de position 40 est configuré pour générer le signal prédéterminé lorsque la partie mobile 40a est en vis-à-vis de la partie fixe 40b.

Le dispositif de cuisson 1 comporte un calculateur 42 électronique formant unité de commande. Le calculateur 42 est électriquement raccordé au capteur de position 40 et est configuré pour inverser le sens de rotation du moteur 28 lorsque le capteur de position 40 génère le signal prédéterminé.

Le dispositif 1 est équipé de moyens de contrôle 44 (représentés à la figure 1) adaptés pour ajuster la vitesse de déplacement du chariot 20, la fréquence de déplacement du chariot 20 et la longueur de course du chariot 20. Les moyens de contrôle 44 sont par exemple réalisés à partir de potentiomètres montés sur la façade du bâti 2.

Le dispositif peut également comporter des moyens de contrôle adaptés pour ajuster la température de cuisson, la durée de cuisson, contrôler un doseur volumétrique d'eau, contrôler le basculement électrique de la cuve 4 relativement au bâti 2, ou encore contrôler un système de type HACPP (pour Hazard Analysis Critical Control Point).

Un procédé de fonctionnement du dispositif 1 est maintenant décrit.

Lors d'une étape de configuration, un utilisateur positionne la partie mobile 40a du capteur 40 en vis-à-vis de la partie fixe 40b. Le chariot 20, le chariot 16 et par la même l'organe 12 sont alors positionnés en position de début de course.

L'utilisateur spécifie la longueur de course du chariot 20 à l'unité de commande 42 à l'aide des moyens de contrôle 44. Cette longueur de course est convertie en un nombre N de pas moteur et est mémorisée par l'unité de commande 42.

L'utilisateur spécifie en outre une vitesse de déplacement du chariot 20 et une fréquence de déplacement du chariot 20 à l'aide des moyens de contrôle 44.

Lors d'une étape d'utilisation, l'utilisateur actionne le déplacement de l'organe 12 à l'aide des moyens de contrôle 44. Dans ces conditions, l'unité 42 commande le moteur 28, lequel entraine la chaine 26 dans un sens aller 50. Le chariot 20 est alors entrainé le long de la direction 22.

En réponse, le chariot 16 est entrainé le long de la direction 18 par le chariot 20, par accouplement magnétique, et l'organe 12 solidaire du chariot est déplacé à l'intérieur de la cuve 4.

A mesure que le chariot 20 est entraîné le long de la direction 22, l'unité de commande 42 décompte le nombre de pas du moteur 4. Lorsque le nombre de pas décompté est égal au nombre N, l'unité de commande 42 détecte la fin de course du chariot 20 et inverse le sens de rotation du moteur 28. Le chariot 20 est alors déplacé dans un sens retour 52.

Lorsque la partie mobile 40a du capteur 40 revient en vis-à-vis de la partie fixe 40b de ce capteur 40, ce dernier génère le signal prédéterminé signifiant que le charriot 20 est revenu en position de début de course. En réponse, l'unité 42 commande le moteur 28, lequel entraine la chaine 26 dans le sens aller 50.

A tout instant, l'utilisateur peut ajuster la vitesse de déplacement du chariot 20, la fréquence de déplacement du chariot 20, et la longueur de course du chariot 20 ou encore stopper la course du chariot 20 à l'aide des moyens de contrôle 44.

L'invention ne se limite pas à la seule forme d'exécution du dispositif de cuisson décrite ci-avant à titre d'exemple, elle en embrasse au contraire toutes les variantes de réalisation.

La cuve 4 n'est pas nécessairement parallélépipédique. En variante, la cuve 4 peut être cylindrique à base circulaire.

Les directions 18 et 22 peuvent être rectilignes et/ou curvilignes.

Afin de faciliter le glissement de l'organe 12 sur la paroi de fond, celle-ci peut être enduite d'un produit anti-adhérent.

## Revendications

1. Dispositif (1) de cuisson, notamment du type sauteuse-braisière, comportant :
- une cuve (4) de cuisson d'une composition alimentaire comprenant une paroi (6) de fond et au moins une paroi (8) latérale ;
- un organe (12) de raclage de la paroi (6) de fond et/ou de brassage de la composition alimentaire monté mobile à l'intérieur de la cuve (4) ; et
- des moyens de déplacement (14) dudit organe (12) ;
où les moyens de déplacement (14) comportent:
- un premier chariot (16) solidaire dudit organe (12), monté mobile à l'intérieur de la cuve (4) le long d'une première direction (18), et un second chariot (20) adapté pour coopérer par accouplement magnétique avec le premier chariot (16), monté mobile à l'extérieur de la cuve (4) le long d'une seconde direction (22) parallèle à la première direction (18), le premier et le second chariots (16, 20) étant disposés de part et d'autre de la paroi latérale (8) ; et
- des moyens d'entrainement (24) du second chariot.

2. Dispositif (1) selon la revendication 1, **caractérisé en ce que** le premier et/ou le second chariots (16 ; 20) comprennent un aimant permanent.

3. Dispositif (1) selon l'une quelconque des revendications 1 à 2, **caractérisé en ce que** la cuve (4) est sensiblement parallélépipédique ;
**en ce que** le premier et le second chariots (16, 20) sont disposés de part et d'autre d'une paroi latérale longitudinale de la cuve (4) ; et
**en ce que** les première et seconde directions (18, 20) s'étendent longitudinalement.

4. Dispositif (1) selon l'une quelconque des revendications 1 à 3, **caractérisé en ce qu**'il est équipé d'un rail de guidage (25) monté à l'extérieur de la cuve (4) agencé pour guider le déplacement du second chariot (20) le long de la seconde direction (22).

5. Dispositif (1) selon l'une quelconque des revendications 1 à 4, **caractérisé en ce que** les moyens d'entrainement (14) comprennent une chaine (26) sans fin sur laquelle est monté le second chariot (20), et un moteur (28) agencé pour entrainer ladite chaine (26).

6. Dispositif (1) selon la revendication 5, **caractérisé en ce que** le moteur (28) est de type pas à pas ; et **en ce que** le dispositif comporte :
- un capteur de position (40) configuré pour générer un signal prédéterminé lors d'un passage du second chariot (20) dans une position prédéterminée ; et
- une unité (42) de commande configurée pour commander le moteur en fonction du signal généré par le capteur de position (40).

7. Dispositif (1) selon la revendication 6, **caractérisé en ce que** la cuve (4) est supportée par un bâti (2) ;
et **en ce que** le capteur de position (40) comprend une partie mobile (40a) montée sur la chaine (26) et une partie fixe (40b) montée sur le bâti (2), le capteur de position (40) étant configuré pour générer le signal prédéterminé lorsque la partie mobile (40a) est en vis-à-vis de la partie fixe (40b).

8. Dispositif (1) selon la revendication 7, **caractérisé en ce que** la chaine (26) forme une boucle présentant un brin supérieur (26a) s'étendant au-dessus de la paroi de fond (6), sur lequel est monté le second charriot (20), et un brin inférieur (26b) s'étendant au-dessous de la paroi de fond (6), sur lequel est montée la partie mobile (40a) du capteur de position (40).

9. Dispositif (1) selon l'une quelconque des revendications 1 à 8, **caractérisé en ce qu'**il est équipé de moyens de contrôle (44) adaptés pour ajuster la vitesse de déplacement du second chariot (20) et/ou la fréquence de déplacement du second chariot (20) et/ou la longueur de course du second chariot (20).

## Patentansprüche

1. Garvorrichtung (1), insbesondere vom Typ Bratpfanne-Schmortopf, umfassend:
- eine Wanne (4) zum Garen einer Lebensmittelzusammensetzung, umfassend eine untere Wand (6) und mindestens eine seitliche Wand (8);
- ein Element (12) zum Abschaben der unteren Wand (6) und/oder zum Rühren der Lebensmittelzusammensetzung, das beweglich im Inneren der Wanne (4) montiert ist; und
- Mittel zur Verschiebung (14) des Elements (12);
wobei die Mittel zur Verschiebung (14) Folgendes umfassen:
- einen ersten Wagen (16), der mit dem Element (12) fest verbunden ist, beweglich im Inneren der Wanne (4) in einer ersten Richtung (18) montiert, und einen zweiten Wagen (20), der ausgelegt ist, um durch magnetische Kupplung mit dem ersten Wagen (16) zusammenzuarbeiten, beweglich an der Außenseite der Wanne (4) in einer zweiten Richtung (22) montiert, die parallel zur ersten Richtung (18) ist, wobei der erste und der zweite Wagen (16, 20) auf beiden Seiten der seitlichen Wand (8) angeordnet sind; und
- Mittel zum Antrieb (24) des zweiten Wagens.

2. Vorrichtung (1) nach Anspruch 1, **dadurch gekennzeichnet, dass** der erste und/oder der zweite Wagen (16, 20) einen Permanentmagneten umfassen.

3. Vorrichtung (1) nach einem der Ansprüche 1 bis 2, **dadurch gekennzeichnet, dass** die Wanne (4) im Wesentlichen parallelepiped ist,
dadurch, dass der erste und der zweit Wagen (16, 20) auf beiden Seiten einer längs gerichteten seitlichen Wand der Wanne (4) angeordnet sind; und
dadurch, dass sich die erste und die zweite Richtung (18, 20) der Länge nach erstrecken.

4. Vorrichtung (1) nach einem der Ansprüche 1 bis 3, **dadurch gekennzeichnet, dass** sie mit einer Führungsschiene (25) ausgestattet ist, montiert auf der Außenseite der Wanne (4), die angeordnet ist, um die Verschiebung des zweiten Wagens (20) in der zweiten Richtung (22) zu führen.

5. Vorrichtung (1) nach einem der Ansprüche 1 bis 4, **dadurch gekennzeichnet, dass** die Antriebsmittel (14) eine Endloskette (26) umfassen, auf der der zweite Wagen (20) montiert ist, und einen Motor (28), der angeordnet ist, um die Kette (26) anzutreiben.

6. Vorrichtung (1) nach Anspruch 5, **dadurch gekennzeichnet, dass** der Motor (28) vom Typ Schrittmotor ist, und dadurch, dass die Vorrichtung Folgendes umfasst:
- einen Positionssensor (40), der konfiguriert ist, um ein vorbestimmtes Signal bei einem Durchgang des zweiten Wagens (20) durch eine zweiten Position zu erzeugen; und
- eine Steuereinheit (42), die konfiguriert ist, um den Motor je nach dem Signal zu steuern, das vom Positionssensor (40) erzeugt wurde.

7. Vorrichtung (1) nach Anspruch 6, **dadurch gekennzeichnet, dass** die Wanne (4) von einem Rahmen (2) getragen wird;
und dadurch, dass der Positionssensor (40) einen beweglichen Teil (40a) umfasst, der auf der Kette (26) montiert ist, und einen festen Teil (40b), der auf dem Rahmen (2) montiert ist, wobei der Positionssensor (40) konfiguriert ist, um das vorbestimmte Signal zu erzeugen, wenn sich der bewegliche Teil (40a) gegenüber dem festen Teil (40b) befindet.

8. Vorrichtung (1) nach Anspruch 7, **dadurch gekennzeichnet, dass** die Kette (26) eine Schleife bildet, die einen oberen Trum (26a) aufweist, der sich über der unteren Wand (6) erstreckt, auf der der zweite Wagen (20) montiert ist, und einen unteren Trum (26b), der sich unter der unteren Wand (6) erstreckt, auf der der bewegliche Teil (40a) des Positionssensors (40) montiert ist.

9. Vorrichtung (1) nach einem der Ansprüche 1 bis 8, **dadurch gekennzeichnet, dass** sie mit Steuermitteln (44) ausgestattet ist, die ausgelegt sind, um die Geschwindigkeit der Verschiebung des zweiten Wagens (20) und/oder die Frequenz der Verschiebung des zweiten Wagens (20) und/oder die Länge des Wegs des zweiten Wagens (20) einzustellen.

## Claims

1. A cooking device (1), particularly of tilting bratt pan-type, including:
- a vessel (4) for cooking a food composition comprising a bottom wall (6) and at least one side wall (8);
- a member (12) for scraping the bottom wall (6) and/or for mixing the food composition movably mounted inside the vessel (4); and
- moving means (14) of said member (12);
wherein the moving means (14) include:
- a first carriage (16) integral with said member (12), movably mounted inside the vessel (4) along a first direction (18), and a second carriage (20) adapted to cooperate by magnetic coupling with the first carriage (16), movably mounted outside the vessel (4) along a second direction (22) parallel to the first direction (18), the first and second carriages (16, 20) being disposed on either side of the side wall (8); and
- driving means (24) of the second carriage.

2. The device (1) according to claim 1, **characterized in that** the first and/or the second carriage (16; 20) comprise a permanent magnet.

3. The device (1) according to any one of claims 1 to 2, **characterized in that** the vessel (4) has a substantially parallelepiped shape;
**in that** the first and second carriages (16, 20) are disposed on either side of a longitudinal side wall of the vessel (4); and
**in that** the first and second directions (18, 20) extend longitudinally.

4. The device (1) according to any one of claims 1 to 3, **characterized in that** it is equipped with a guide rail (25) mounted outside the vessel (4) arranged to guide the movement of the second carriage (20) along the second direction (22).

5. The device (1) according to any one of claims 1 to 4, **characterized in that** the driving means (14) comprise an endless chain (26) on which the second carriage (20) is mounted, and an engine (28) arranged to drive said chain (26).

6. The device (1) according to claim 5, **characterized in that** the engine (28) is of stepping type; and **in that** the device includes:
- a position sensor (40) configured to generate a predetermined signal during a passage of the second carriage (20) in a predetermined position; and
- a control unit (42) configured to control the engine according to the signal generated by the position sensor (40).

7. The device (1) according to claim 6, **characterized in that** the vessel (4) is supported by a frame (2);
and **in that** the position sensor (40) comprises a movable portion (40a) mounted on the chain (26) and a fixed portion (40b) mounted on the frame (2), the position sensor (40) being configured to generate the predetermined signal when the movable portion (40a) is facing the fixed portion (40b).

8. The device (1) according to claim 7, **characterized in that** the chain (26) forms a loop having an upper strand (26a) extending above the bottom wall (6), on which the second carriage (20) is mounted, and a lower strand (26b) extending below the bottom wall (6), on which the movable portion (40a) of the position sensor (40) is mounted.

9. The device (1) according to any one of claims 1 to 8, **characterized in that** it is equipped with checking means (44) adapted to adjust the traveling speed of the second carriage (20) and/or the traveling frequency of the second carriage (20) and/or the stroke length of the second carriage (20).
